# EUROPÄISCHE PATENTSCHRIFT

(11) **EP 0 739 086 B1**
(45) Veröffentlichungstag und Bekanntmachung des Hinweises auf die Patenterteilung: **16.06.1999**
(21) Anmeldenummer: 96100377.9
(22) Anmeldetag: 12.01.1996
(51) Int. Cl.: H02P 7/74, H02P 7/00

(54) **Verfahren und Vorrichtung zum Ansteuern von Synchronmotoren**
Method and device for driving synchronous motors
Méthode et dispositif pour commander des moteurs synchrones

(30) Priorität: 19.04.1995 CH 11895
(43) Veröffentlichungstag der Anmeldung: 23.10.1996
(73) Patentinhaber: Landis & Gyr Technology Innovation AG, 6301 Zug (CH)
(72) Erfinder: Larsson, Krister, S-14150 Huddinge (SE)
(74) Vertreter: EGLI-EUROPEAN PATENT ATTORNEYS

(56) Entgegenhaltungen:
- DE-A- 2 942 793
- DE-A- 3 803 119
- US-A- 4 528 489

## Beschreibung

Die Erfindung betrifft ein Verfahren und eine Vorrichtung zum Ansteuern mehrerer mit einer gemeinsamen Stromversorgung verbundener Synchronmotoren nach den Oberbegriffen der Patentansprüche 1 und 3.

Elektromagnetische Betätigungsglieder mit einem Synchronmotor, wie sie beispielsweise zum Oeffnen und Schliessen von Ventilen oder anderen Stellelementen eingesetzt werden, verwenden häufig einen Synchronmotor mit einem Anschluss für den Vorwärts lauf, einem Anschluss für den Rückwärtslauf und einem neutralen (gemeinsamen) Anschluss. Für den Vorwärtslauf des Synchronmotors wird der Anschluss für den Vorwärtslauf und der neutrale Anschluss mit dem Steuergerät bzw. der darin eingebauten Stromversorgung verbunden, für den Rückwärtslauf jedoch der Anschluss für den Rückwärtslauf und der neutrale Anschluss. Wird pro Ausgang des Steuergerätes nur ein derartiges Betätigungsglied bzw. nur ein derartiger Synchronmotor angeschlossen, so können zwischen den Ausgängen des Steuergerätes und den Anschlüssen für den Vorwärts- bzw. Rückwärtslauf ohne weiteres auch Endschalter eingesetzt werden, die bei Erreichen der Endstellungen des Betätigungsgliedes (z.B. Offen- oder Geschlossen-Stellungen des Ventils) jeweils die Stromversorgung für den Synchronmotor abschalten.

Werden nun an einem Ausgang des Steuergerätes mehrere derartige Betätigungsglieder bzw. Synchronmotoren parallel angeschlossen, so ergeben sich Funktionsstörungen, sofern nicht alle Endschalter im genau gleichen Moment die Stromversorgung zu den Synchronmotoren ausschalten. Weil durch einen vorzeitigen Unterbruch nur eines der beteiligten Endschalter die Symmetrie der Schaltung und dadurch die Phasenverschiebung in den Wicklungen aller Synchronmotoren gestört wird, geraten alle parallelgeschalteten Synchronmotoren in einen Schwingungszustand und stehen demzufolge still. Die übrigen parallelgeschalteten Betätigungsglieder erreichen somit ihre Endstellungen nicht. Endschalter werden deshalb bei den bestehenden Lösungen für parallelgeschaltete Betätigungsglieder der genannten Art nicht verwendet.

Trotzdem ist es erwünscht, Betätigungsglieder bzw. Synchronmotoren parallelschalten zu können, weil sich dann die Anzahl der notwendigen Ausgänge an den Steuergeräten reduziert lassen und tiefere Kosten entstehen. Eine gängige Lösung besteht darin, dass anstelle von Endschaltern Magnetkupplungen in Getriebeboxen verwendet werden und dass alle parallelgeschalteten Synchronmotoren einfach solange in Betrieb gehalten werden, wie das betreffende Signal vom Steuergerät auf "Ein" steht. Es ist auch bekannt, das Signal vom Steuergerät mit einer Verzögerung erst dann auszuschalten, wenn angenommen werden kann, dass alle Betätigungsglieder ihre Endstellung erreicht haben. Diese Lösungen haben jedoch den Nachteil, dass die Synchronmotoren auch dann noch laufen, wenn die Endstellung schon erreicht ist. Wegen des Einsatzes von Magnetkupplungen erhöht sich die Abnützung in den Synchronmotoren und in den Getrieben beträchtlich, was deren Lebensdauer veringert. Zudem ist auch der Stromverbrauch um einiges erhöht und der von den Synchronmotoren und der Magnetkupplung erzeugte Lärm wirkt störend.

Ausserdem ist aus der DE-A-29 42 793 eine Verstellvorrichtung mit zwei parallelgeschalteten Synchronmotoren (M1 und M2) bekannt, die zum Verstellen eines Elementes zwischen zwei Endlagen eingesetzt werden und einen Anschluss für den Vorwärtslauf, einen Anschluss für den Rückwärtslauf und einen neutralen Anschluss besitzen. Die Verbindung zwischen dem jeweils gebrauchten Anschluss und der Stromversorgung wird mittels Endschalter, die jeweils dann ansprechen, wenn das Element die jeweilige Endstellung erreicht hat, unterbrochen. Die Endschalter sind zudem direkt in den Stromkreisen der Synchronmotoren angeordnet. Die Verbindung zwischen dem jeweils nicht gebrauchten Anschluss und der Stromversorgung ist während des Nichtgebrauchs ständig unterbrochen. Dazu dienen Umschaltkontakte eines Relais (E), das zwischen Vorwärts- und Rückwärtslauf umschaltet. Weil die nichtgebrauchten Anschlüsse der Synchronmotoren im Nichtgebrauchsfall nicht miteinander verbunden sind, werden Unsymmetrien und daraus resultierende Störungen vermieden. Nachteilig ist, dass für jeden Synchronmotor ein Umschaltkontakt des Relais (E) notwendig ist. Insgesamt zeigt die DE-A-29 42 793 - obwohl lediglich für zwei parallelgeschaltete Synchronmotoren ausgelegt - wegen der verwendeten Relaistechnik einen ziemlich aufwendigen Schaltungsaufwand.

Die Aufgabe der Erfindung ist es, ein Verfahren und eine Vorrichtung zum Ansteuern mehrerer mit einer gemeinsamen Stromversorgung verbundener Synchronmotoren anzugeben, die die erwähnten Nachteile nicht mehr aufweisen.

Diese Aufgabe wird durch die im Kennzeichen der Patentansprüche 1 und 3 genannten Merkmale gelöst.

Die Lösung verwendet je ein Schaltelement mit einem Steuereingang und eine einen Endschalter enthaltende Steuerschaltung, die jeweils den Anschlüssen des Synchronmotors für den Vor- bzw. Rückwärtslauf vorgeschaltet sind. Damit wird ein Stromfluss bzw. Ausgleichsströme über die jeweils nicht gebrauchten Anschlüsse bei Parallelschaltung mehrerer Synchronmotoren, insbesondere beim Ansprechen der Endschalter, verhindert.

Die Vorteile der Erfindung bestehen darin, dass elektromagnetische Betätigungsglieder mit einem Synchronmotor, einem Anschluss für den Vorwärtslauf, einem Anschluss für den Rückwärtslauf und einem neutralen Anschluss über Endschalter parallel geschaltet werden können, ohne dass Funktionsstörungen beim Ansprechen der Endschalter auftreten. Die Abnützung der Synchronmotoren und der Getriebe wird veringert und dadurch deren Lebensdauer erhöht. Der Stromverbrauch wird verkleinert und die Geräuschentwicklung reduziert.

Ein Ausführungsbeispiel der erfindungsgemässen Lösung wird im folgenden anhand von Zeichnungen näher erläutert. Es zeigen
- Fig. 1: parallelgeschaltete Synchronmotoren mit Endschaltern zur Veranschaulichung des Prinzips und
- Fig. 2: ein erfindungsgemässe Vorrichtung zur Parallelschaltung mehrerer mit einer gemeinsamen Stromversorgung verbundener Synchronmotoren.

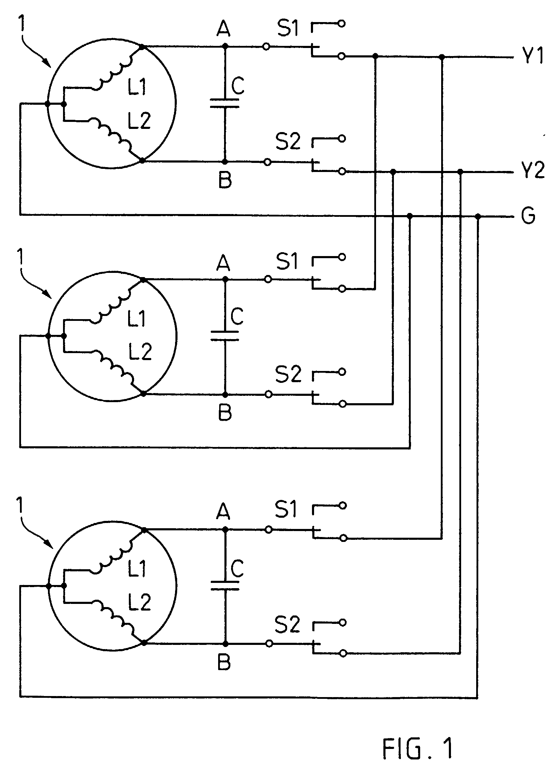

Fig. 1 zeigt zur Veranschaulichung der Schaltungsprinzipes drei parallelgeschaltete elektromagnetische Betätigungsglieder mit je einem Synchronmotor 1, mit einem Anschluss Y1 für den Vorwärtslauf, einem Anschluss Y2 für den Rückwärtslauf und einem neutralen Anschluss G. Der Anschluss Y1 für Vorwärtslauf ist jeweils über einen Endschalter S1 mit einem Ende A einer ersten Wicklung L1 des Synchronmotors 1 verbunden. Der Anschluss Y2 für Rückwärtslauf ist jeweils über einen Endschalter S2 mit einem Ende B einer zweiten Wicklung L2 des Synchronmotors 1 verbunden. Die anderen Enden der Wicklungen L1 und L2 sind mit dem neutralen Anschluss G verbunden. Zwischen dem Ende A der ersten Wicklung L1 und dem Ende B der zweiten Wicklung L2 ist jeweils ein Kondensator C angeschlossen.

Im Normalbetrieb, angenommen sei hier der Vorwärts lauf, wird beispielsweise eine Wechselspannung von 24V an den Anschluss Y1 für den Vorwärtslauf und den neutralen Anschluss G gelegt. Im Vorwärts lauf sind zunächst auch alle Endschalter S1 geschlossen. Die Wechselspannung liegt direkt an den ersten Wicklungen L1. Die Wicklungen L2 sind über die Kondensatoren C ebenfalls mit der Wechselspannung verbunden. Die Induktivität der Wicklungen L2 und der Kondensatoren C sind dabei so gewählt, dass die Phasenverschiebung zwischen Strom und Spannung am Ende B der Wicklung 2 den Wert von 90° erreicht (in der Praxis ist eine Toleranz von +/-30% zulässig). Wegen der symmetrischen Potentialverläufe zwischen L2 und C (die Enden B der Wicklungen L2 sind alle über den nicht gebrauchten Anschluss Y2 verbunden) bleibt die Schaltung stabil, solange keiner der Endschalter S1 öffnet.

Erreicht aber eines der so gesteuerten Ventile (oder sonstigen Stellelemente) die Endstellung, so öffnet der betreffende Endschalter S1. Hier wird angenommen, das sei beim zuoberst dargestellten Synchronmotor 1 (Fig. 1) der Fall. Mit dem Oeffnen des Endschalters S1 werden die vorstehend erwähnten Symmetrieverhältnisse gestört. Zwischen den Anschlüssen Y1 und G liegen nur noch die zwei Wicklungen L1 der übrigen zwei Synchronmotoren 1. Zwischen den Anschlüssen Y1 und Y2 liegen nur noch die zwei Kapazitäten C der übrigen zwei Synchronmotoren 1. Zwischen den Anschlüssen Y2 und G liegen nunmehr nicht nur die drei Wicklungen L2 von allen drei Synchronmotoren 1, sondern auch (in Serie) die Wicklung L1 und die Kapazität C des obersten Synchronmotors 1. Alle Synchronmotoren 1 fangen an zu vibrieren und stehen still, weil die Bedingung für die Phasenlage von Strom und Spannung an den Enden B der Wicklungen L2 nicht mehr erfüllt ist. Aus den dargelegten Gründen ist eine einfache Parallelschaltung von Betätigungsvorrichtungen mit Synchronmotoren über Endschalter (wie in Fig. 1 gezeigt) nicht möglich.

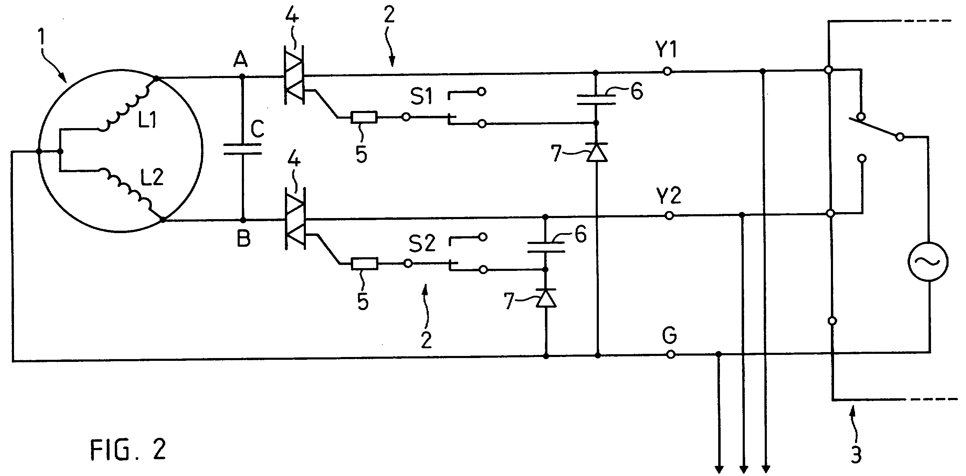

Fig. 2 zeigt ein erfindungsgemässe Vorrichtung zur Parallelschaltung mehrerer mit einer gemeinsamen Stromversorgung verbundener Synchronmotoren. Jeder Synchronmotor 1 hat einen Anschluss Y1 für den Vorwärtslauf, einen Anschluss Y2 für den Rückwärtslauf und einen neutralen Anschluss G. Ein Steuergerät 3 legt die Wechselspannung einer Stromversorgung entweder an die Anschlüsse Y1 und G, falls der Synchronmotor im Vorwärtslauf betrieben wird, oder an die Anschlüsse Y2 und G, falls der Synchronmotor 1 im Rückwärtslauf betrieben wird. Weitere Synchronmotoren der gleichen Art können parallelgeschaltet sein (angedeutete Pfeile). Dem Anschluss Y1 für den Vorwärtslauf und dem Anschluss Y2 für den Rückwärtslauf sind je ein Schaltelement mit einem Steueranschluss vorgeschaltet, wobei der Steueranschluss jeweils mit je einer einen Endschalter S1 oder S2 enthaltenden Steuerschaltung 2 verbunden ist. Im Unterschied zur Schaltung gemäss Fig. 1 sind hier die Endschalter S1 und S2 jedoch nicht direkt im Motorenstromkreis angeordnet. Das Schaltelement ist ein Trioden-Wechselstromschalter (TRIAC) 4. Selbstverständlich können zur Erzielung der Schaltfunktion auch andere Schaltelemente, beispielsweise Relais, verwendet werden.

Die Steuerschaltung 2 wird im folgenden für den im dargestellten Beispiel (Fig. 2) gebrauchten Anschluss Y1 für den Vorwärtslauf erläutert, die Erläuterungen gelten jedoch sinn-gemäss auch für die entsprechende Steuerschaltung 2 des nicht gebrauchten Anschlusses Y2. Der Steueranschluss des Trioden-Wechselstromschalters 4 ist über einen Widerstand 5 mit dem Oeffnungskontakt des Endschalters S1 verbunden. Ferner ist der Anschluss Y1 für den Vorwärtslauf über einen Steuerkondensator 6 und eine Diode 7 derart mit dem neutralen Anschluss G verbunden, dass die Sperrseite der Diode 7 mit dem Steuerkondensator 6 und gleichzeitig auch mit dem Oeffnungskontakt des Endschalters S1 verbunden ist.

Die Steuerschaltung 2 funktioniert folgendermassen: Der Trioden-Wechselstromschalter 4 wird von der Diode 7, dem Steuerkondensator 6 und dem Widerstand 5 gesteuert. Dabei ist der Trioden-Wechselstromschalter 4 nur dann eingeschaltet, wenn der Steuerkondensator 6 geladen ist. Dies ist der Fall, wenn die Wechselspannung der Stromversorgung zwischen den Anschlüssen Y1 und G anliegt. Der Steuerkondensator 6 und die Diode 7 dienen somit als Detektionselement. Der Steuerkondensator 6 wird über die Diode 7 auf den Spitzenwert der angelegten Wechselspannung aufgeladen. Die Spannung über dem Steuerkondensator 6 erzeugt dann einen Strom durch den Widerstand 5, der den Trioden-Wechselstromschalter über dessen Gate-Anschluss aktiviert. Der Widerstand 5 dient dazu, den Strom zur Aktivierung des Trioden-Wechselstromschalters zu begrenzen. Gebräuchliche Trioden-Wechselstromschalter, beispielsweise ein TRIAC gemäss IEC 191-2 im TO-92 Gehäuse, erfordern einen Ansteuerstrom von ca. 5 bis 10 mA. Liegt keine Wechselspannung zwischen den Anschlüssen Y1 und G, so entlädt sich der Steuerkondensator 6 und der Trioden-Wechselstromschalter wird wieder ausgeschaltet. Oeffnet der Endschalter S1, so wird der Synchronmotor 1 ebenfalls ausgeschaltet. Die gezeigte Steuerschaltung 2 benötigt keine separate Stromversorgung und der Stromverbrauch der Steuerschaltung für den jeweils nicht gebrauchten Anschluss ist zudem gleich Null.

Mit der gezeigten Schaltung wird also bewirkt, dass die Verbindung zwischen dem gebrauchten Anschluss Y1 und der Stromversorgung mittels eines Endschalters S1, welcher anspricht, wenn das Stellelement eine Endstellung erreicht hat, unterbrochen wird. Zudem wird auch bewirkt, dass die Verbindung zwischen dem nicht gebrauchten Anschluss Y2 und der Stromversorgung bzw. den nicht gebrauchten Anschlüssen Y2 der übrigen parallelgeschalteten Synchronmotoren nicht nur dann unterbrochen ist, wenn der Endschalter S1 anspricht, sondern solange wie eben der Anschluss Y2 tatsächlich nicht gebraucht ist.

Nicht gebrauchte Anschlüsse werden mit der gezeigten Lösung dauernd und zuverlässig abgeschaltet. Werden mehrere Synchronmotoren gemäss Fig. 2 parallelgeschaltet - und beispielsweise wie gezeigt im Vorwärtslauf betrieben (die Wechselspannung ist dann bei allen Synchronmotoren 1 zwischen den Anschlüssen Y1 und G angelegt) - so sind alle Anschlüsse Y2 abgeschaltet. Das heisst, dass selbst dann, wenn einer der Endschalter S1 öffnet, die Schaltung nicht in einen instabilen Zustand geraten kann, weil die (störenden) Parallelverbindungen über die Anschlüsse Y2 unterbrochen sind. Der jeweils zuerst abgeschaltete Synchronmotor 1 beeinflusst die Symmetrie der übrigen parallelgeschalteten Synchronmotoren 1 nicht mehr, denn beide Wicklungen L1 und L2 sind von den jeweiligen Anschlüssen Y1 und Y2 zuverlässig getrennt.

Das zum Vorwärtslauf Gesagte trifft in analoger Weise auch für den Rückwärtslauf zu.

## Patentansprüche

1. Verfahren zum Ansteuern mehrerer mit einer gemeinsamen Stromversorgung verbundener Synchronmotoren (1), welche jeweils zum Verstellen eines Elements zwischen zwei Endstellungen eingesetzt werden und einen Anschluss (Y1) für den Vorwärtslauf, einen Anschluss (Y2) für den Rückwärtslauf und einen neutralen Anschluss (G) aufweisen, wobei jeweils die Verbindung zwischen dem gebrauchten Anschluss (Y1 oder Y2) und der Stromversorgung mittels eines Endschalters (S1 oder S2), welcher anspricht, wenn das Element eine Endstellung erreicht, unterbrochen wird und die Verbindung zwischen dem nicht gebrauchten Anschluss (Y2 oder Y1) und der Stromversorgung während des Nichtgebrauchs jeweils mindestens dann unterbrochen ist, wenn die erstgenannte Verbindung unterbrochen ist, **dadurch gekennzeichnet, dass** die Verbindungen zwischen dem gebrauchten Anschluss (Y1 oder Y2) und der Stromversorgung mittels im Motorenstromkreis angeordneter steuerbarer Schaltelemente unterbrochen werden, die in ihrer Steuerschaltung die Endschalter (S1 oder S2) enthalten.

2. Verfahren nach Anspruch 1, **dadurch gekennzeichnet, dass** jeweils die Verbindung zwischen dem nicht gebrauchten Anschluss (Y2 oder Y1) und der Stromversorgung während des Nichtgebrauchs unterbrochen ist.

3. Vorrichtung zur Durchführung des Verfahrens nach Anspruch 1 oder 2, mit mindestens einem Synchronmotor (1), welcher einen Anschluss (Y1) für den Vorwärtslauf, einen Anschluss (Y2) für den Rückwärtslauf sowie einen neutralen Anschluss (G) aufweist, **dadurch gekennzeichnet, dass** dem Anschluss (Y1) für den Vorwärtslauf und dem Anschluss (Y2) für den Rückwärtslauf je ein Schaltelement vorgeschaltet ist mit einem Steuereingang, der mit je einer einen Endschalter (S1, S2) enthaltenden Steuerschaltung verbunden ist.

4. Vorrichtung nach Anspruch 3, **dadurch gekennzeichnet, dass** die Steuerschaltung ein Detektionselement umfasst, welches genau dann eine Ausgangssteuerspannung erzeugt, wenn zwischen dem Anschluss (Y1) für den Vorwärtslauf bzw. dem Anschluss (Y2) für den Rückwärtslauf und dem neutralen Anschluss (G) eine Spannung anliegt.

5. Vorrichtung nach Anspruch 4, **dadurch gekennzeichnet, dass** das Detektionselement jeweils über den Endschalter (S1 oder S2) mit dem Steuereingang des Schaltelements verbunden ist.

6. Vorrichtung nach Anspruch 5, **dadurch gekennzeichnet, dass** das Detektionselement einen mit einer Diode (7) in Serie geschalteten Steuerkondensator (6) enthält und zwischen dem neutralen Anschluss (G) und dem Anschluss (Y1) für den Vorwärtslauf bzw. dem Anschluss (Y2) für den Rückwärtslauf angeschlossen ist.

7. Vorrichtung nach einem der Ansprüche 3 bis 6, **dadurch gekennzeichnet, dass** das Schaltelement ein Trioden-Wechselstromschalter (4) ist.

## Claims

1. A method of actuating a plurality of synchronous motors (1) which are connected to a common power supply and which are used for displacing a respective element between two limit positions and have a connection (Y1) for forward motion, a connection (Y2) for reverse motion and a neutral connection (G), wherein the respective connection between the connection (Y1 or Y2) which is in use and the power supply is interrupted by means of a limit switch (S1 or S2) which responds when the element reaches a limit position and the connection between the connection (Y2 or Y1) which is not in use and the power supply is respectively interrupted during non-use at least when the first-mentioned connection is interrupted, characterised in that the connections between the connection (Y1 or Y2) which is in use and the power supply are interrupted by means of controllable switch elements which are arranged in the motor circuit and which include the limit switches (S1 or S2) in their control circuit.

2. A method according to claim 1 characterised in that the respective connection between the connection (Y2 or Y1) which is not in use and the power supply is interrupted during non-use.

3. Apparatus for carrying out the method according to claim 1 or claim 2 comprising at least one synchronous motor (1) which has a connection (Y1) for forward motion, a connection (Y2) for reverse motion and a neutral connection (G), characterised in that a respective switch element is connected upstream of the connection (Y1) for forward motion and the connection (Y2) for reverse motion, the respective switch element having a control input which is connected to a respective control circuit including a limit switch (S1, S2).

4. Apparatus according to claim 3 characterised in that the control circuit includes a detection element which produces an output control voltage precisely when a voltage occurs between the connection (Y1) for forward motion or the connection (Y2) for reverse motion and the neutral connection (G).

5. Apparatus according to claim 4 characterised in that the detection element is respectively connected to the control input of the switch element by way of the limit switch (S1 or S2).

6. Apparatus according to claim 5 characterised in that the detection element includes a control capacitor (6) which is connected in series with a diode (7), and is connected between the neutral connection (G) and the connection (Y1) for forward motion or the connection (Y2) for reverse motion respectively.

7. Apparatus according to one of claims 3 to 6 characterised in that the switch element is a triode-ac switch (4).

## Revendications

1. Procédé destiné à commander plusieurs moteurs synchrones (1) reliés par une alimentation en courant commune, qui sont chacun utilisés pour le déplacement d'un élément entre deux positions extrêmes et présentent un raccordement (Y1) pour la marche avant, un raccordement (Y2) pour la marche arrière et un raccordement neutre (G), où à chaque fois la liaison entre le raccordement utilisé (Y1 ou Y2) et l'alimentation en courant est interrompue au moyen d'un contacteur de fin de course (S1 ou S2), qui réagit lorsque l'élément atteint une position extrême, et où à chaque fois la liaison entre le raccordement (Y2 ou Y1) non utilisé et l'alimentation en courant est interrompue durant la non-utilisation, au moins lorsque la liaison citée en premier lieu est interrompue caractérisé en ce que les liaisons entre le raccordement utilisé (Y1 ou Y2) et l'alimentation en courant sont interrompues au moyen d'éléments de commutation pouvant être commandés, qui sont placés dans le circuit de courant du moteur et qui renferment dans leur circuit de commande les contacteurs de fin de course (S1 ou S2).

2. Procédé selon la revendication 1, caractérisé en ce qu'à chaque fois la liaison entre le raccordement (Y2 ou Y1) non utilisé et l'alimentation en courant est interrompue durant la non-utilisation.

3. Dispositif pour la mise en oeuvre du procédé selon la revendication 1 ou 2, comprenant au moins un moteur synchrone (1) qui présente un raccordement (Y1) pour la marche avant, un raccordement (Y2) pour la marche arrière ainsi qu'un raccordement neutre (G), caractérisé en ce qu'avec le raccordement (Y1) pour la marche avant et le raccordement (Y2) pour la marche arrière est monté en série un élément de commutation comprenant une entrée de commande qui est reliée à un circuit de commande respectif renfermant un contacteur de fin de course respectif (S1, S2).

4. Dispositif selon la revendication 3, caractérisé en ce que le circuit de commande comprend un élément de détection, qui engendre une tension de commande de sortie exactement lorsqu'une tension est établie entre le raccordement (Y1) pour la marche avant ou respectivement le raccordement (Y2) pour la marche arrière et le raccordement neutre (G).

5. Dispositif selon la revendication 4, caractérisé en ce que l'élément de détection est relié par l'intermédiaire du contacteur de fin de course respectif (S1 ou S2) à l'entrée de commande de l'élément de commutation respectif.

6. Dispositif selon la revendication 5, caractérisé en ce que l'élément de détection renferme un condensateur de commande (6) monté en série avec une diode (7), et est connecté entre le raccord neutre (G) et le raccord (Y1) pour la marche avant ou respectivement le raccord (Y2) pour la marche arrière.

7. Dispositif selon l'une des revendications 3 à 6, caractérisé en ce que l'élément de commutation est un commutateur à triodes en courant alternatif (4).
